**Europäisches Patentamt**

**European Patent Office**

**Office européen des brevets**

(11) Publication number : **0 546 822 A2**

# EUROPEAN PATENT APPLICATION

(21) Application number : **92311243.7**

(22) Date of filing : **09.12.92**

(51) Int. Cl.⁵ : **G01C 9/20**

(30) Priority : **11.12.91 IL 100345**

(43) Date of publication of application :
**16.06.93 Bulletin 93/24**

(84) Designated Contracting States :
**AT BE CH DE DK ES FR GB GR IE IT LI LU MC NL PT SE**

(71) Applicant : **THE STATE OF ISRAEL, MINISTRY OF DEFENSE, RAFAEL-ARMAMENT DEVELOPMENT AUTHORITY**
**P.O. Box 2250**
**Haifa 31 021 (IL)**

(72) Inventor : **Netzer, Yishay**
**112 Yuvalim**
**20 142 (IL)**
Inventor : **Frankl, Efraim**
**19 Yzuel Street**
**Kiryat Motzkin 26 332 (IL)**

(74) Representative : **Hillier, Peter**
**Reginald W. Barker & Co., 13, Charterhouse Square**
**London, EC1M 6BA (GB)**

(54) **Inclinometer using a dielectric liquid.**

(57)   An inclinometer including a housing defining first and second wall surfaces, a first conductive plate defined along said first wall surface, a second conductive plate defined along said second wall surface, the second conductive plate including first and second plate portions which are electrically insulated from each other, a dielectric liquid disposed within said housing and in capacitive relationship with said first and second conductive plates such that a change of inclination of the housing results in a corresponding change of relative rotational orientation between the liquid and the housing, such that the capacitance measured through the first and second plate portions varies as a function of the inclination of the housing.

FIG.1

EP 0 546 822 A2

## FIELD OF THE INVENTION

The present invention relates to inclinometers.

## BACKGROUND OF THE INVENTION

Various types of inclinometers are known in the art.

Capacitive inclinometers are described inter alia in U.S. Patents 4,624,140; 4,521,973 and 4,644,662 and in an article entitled "Capacitance Difference Reveals Angular Position" by Lyle H.McCarty, in Design News, 6-16-86 pp 110 - 113.

The prior art inclinometers generally are limited in their angular range and suffer from inherent non-linearity which requires electronic correction.

## SUMMARY OF THE INVENTION

The present invention seeks to provide an improved inclinometer.

There is thus provided in accordance with a preferred embodiment of the present invention an inclinometer including a housing defining first and second wall surfaces, a first conductive plate defined along the first wall surface, a second conductive plate defined along the second wall surface, the second conductive plate including first and second plate portions which are electrically insulated from each other, a dielectric or conductive liquid disposed within the housing and in respective capacitive or conductive relationship with the first and second capacitive plates such that a change of inclination of the housing results in a corresponding change of relative rotational orientation between the liquid and the housing, such that the capacitance or conductance measured through the first and second plate portions varies as a function of the inclination of the housing.

In accordance with a preferred embodiment of the present invention the first and second plate portions are arranged and operated such that the capacitance measured therethrough varies as a generally linear function of the inclination of the housing.

The linearity of operation of the inclinometer is due, at least in part, to maintenance of the first and second plate portions at substantially the same potential, preferably virtual ground, i.e. zero volts. This prevents cross coupling between the first and second plate portions.

Due to the cylindrical shape of the housing and the relatively narrow gap between the first and second plate portions, the electric field between the first and second conductive plates is relatively constant and is substantially rotationally symmetric. As a result the currents in the dielectric or conductive liquid are substantially proportional to the angular overlap between the liquid and one of the first and second capacitor plates.

Alternatively, the plates need not be maintained at the same potential and instead function as timing capacitors, such as described in the aforementioned U.S. Patent 4,524,140 or as timing resistors in a timer circuit if a conductive liquid is employed.

Additionally in accordance with a preferred embodiment of the present invention the housing is formed of an electrical insulator and the conductive plates are defined by conductive coatings formed on surfaces of the housing.

Further in accordance with a preferred embodiment of the present invention the housing is formed of two pieces which are fixed together, preferably by vapor phase soldering.

Additionally in accordance with a preferred embodiment of the present invention the housing is hermetically sealed and is provided with at least one liquid ingress aperture, which is sealed subsequent to insertion of the liquid and also serves as a plated through electrical connector hole, permitting connection of an electrical conductor external to the housing to at least one of the conductive plates.

Still further in accordance with a preferred embodiment of the present invention the housing is formed of a ceramic material.

Also in accordance with a preferred embodiment of the present invention the housing is formed by injection molding or machining.

In accordance with a preferred embodiment of the present invention the apparatus also includes output circuitry coupled to the conductive plates for providing an output indication of inclination of the housing to display or utilization apparatus.

Further in accordance with a preferred embodiment of the present invention the output circuitry is formed onto the housing and includes a printed circuit formed onto an outer surface of the housing.

## BRIEF DESCRIPTION OF THE DRAWINGS

The present invention will be understood and appreciated more fully from the following detailed description, taken in conjunction with the drawings in which:

Fig. 1 is an exploded pictorial illustration of an inclinometer constructed and operative in accordance with a preferred embodiment of the present invention;

Fig. 2 is a sectional illustration of the inclinometer of Fig. 1, taken along lines II - II in Fig. 1;

Figs. 3A and 3B are two sectional illustrations of the inclinometer of Figs. 1 and 2, both taken along lines IV - IV in Fig. 1, for two different inclinations of the inclinometer;

Fig. 4 is a simplified electronic schematic illustration of the electrical potential connections to the first and second capacitor plates in the apparatus of Figs. 1 - 3B; and

Figs. 5A and 5B are two sectional illustrations corresponding to Figs. 3A and 3B respectively but for an embodiment wherein conductive surface 16 includes four quadrants.

## DETAILED DESCRIPTION OF A PREFERRED EMBODIMENT

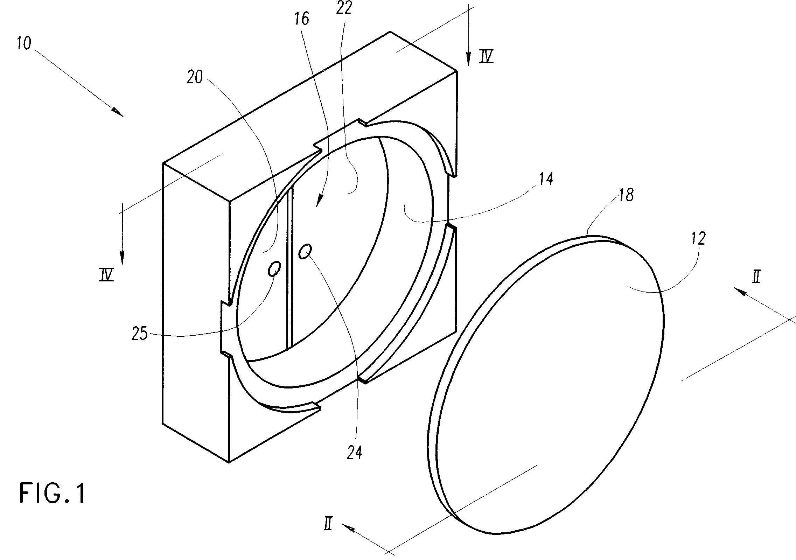

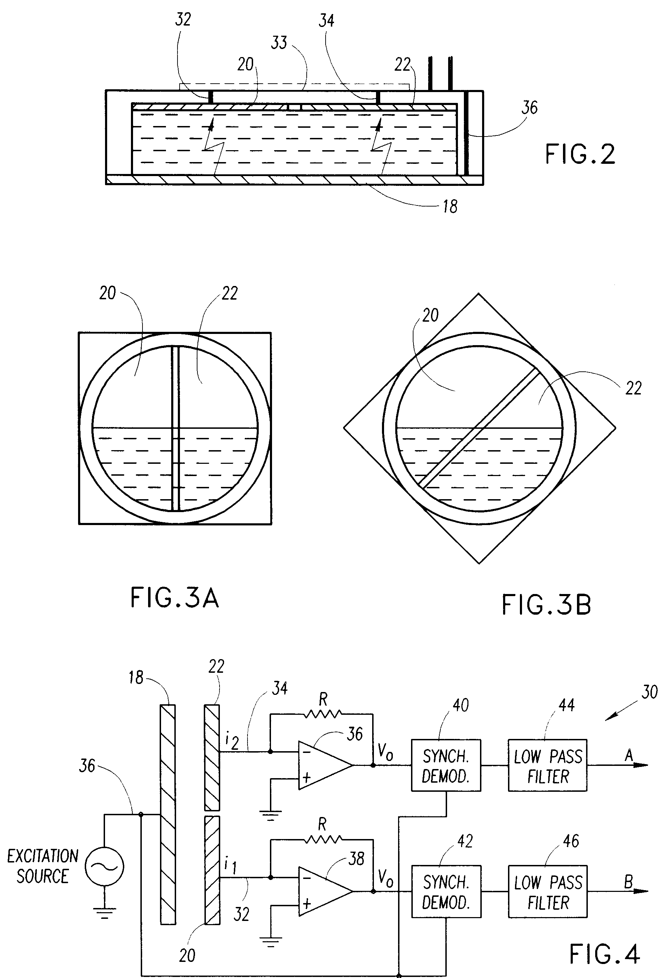

Reference is now made to Figs. 1 and 2, which illustrate an inclinometer constructed and operative in accordance with a preferred embodiment of the present invention. The inclinometer preferably comprises a two piece housing, which is preferably injection molded of a ceramic material, or machined from a ceramic material such as Macor, available from Corning, and includes a base portion 10 and a cover portion 12.

As illustrated, base portion 10 defines a recess 14, which is sealed by cover portion 12 and is adapted to contain a dielectric liquid, such as is conventional in capacitive sensors or alternatively a conductive liquid, such as isopropyl alcohol. Preferably recess 14 is defined by a flat surface of base portion 10 and a flat surface of cover portion 12.

According to a preferred embodiment of the present invention, the flat surface of base portion 10 is formed with a two-part mutually insulated conductive surface 16, while the flat surface of cover portion 12 is formed with a unitary conductive surface 18. Surfaces 16 and 18 thus define the parallel plates of a capacitor. Preferably conductive surfaces 16 and 18 are formed by vapor deposition of metal onto the respective surfaces of base portion 10 and cover portion 12.

More precisely, conductive surface 16 includes first and second plate portions 20 and 22 which are electrically insulated from each other. Together with the dielectric fluid in recess 14, each of plate portions 20 and 22 defines a capacitor in cooperation with a corresponding facing portion of plate 18.

It is a particular feature of the present invention that the inclinometer is defined by only two plates, both of which are associated with wall portions of corresponding parts of a two part housing. This provides simplicity and reliability to the construction of the inclinometer of the present invention.

It may be appreciated that if generally half of the recess 14 is filled with a dielectric or conductive liquid, the relative orientation of the housing relative to the dielectric liquid level, which is constant as determined by gravity, will provide a corresponding ratio of capacitances between the capacitors defined by plate portions 20 and 22. This ratio can be used to provide a useful output indication of inclination in the plane of plates 16 and 18.

In accordance with a preferred embodiment of the present invention the cover portion 12 is hermetically sealed to the body portion 10 and a quantity of dielectric fluid, preferably sufficient to half fill the cavity 14, is supplied to the cavity via plated through apertures 24 and 25 extending through a portion of the housing and through one of the capacitor plates. After insertion of the dielectric fluid, the apertures 24 and 25 can be sealed. The plated through apertures define a conductive connection to that conductive plate, as shown. The apertures 24 and 25 are preferably hermetically sealed as by soldering, thereby sealing the interior of the housing and cavity 14.

In accordance with a preferred embodiment of the invention, output circuitry 30 (Fig.4) is provided in operative association with the conductive plates and receives inputs therefrom via electrical conductors 32, 34 and 36.

According to a preferred embodiment of the present invention, the output circuitry is embodied in a printed circuit which may employ an outer surface for example surface 33 of the housing as a circuit substrate.

The operation of the apparatus of Figs. 1 and 2 in a capacitive sensing mode can be appreciated from a consideration of Figs. 3A and 3B, wherein two different orientations of the housing are shown, separated by 45 degrees in the plane of the capacitor plates 16 and 18. The relative amounts of dielectric fluid in capacitive association with plate portions 20 and 22 vary linearly as a function of the inclination of the housing in the plane of plate portions 20 and 22 and thus provide capacitance outputs which indicate such orientation via the output circuitry.

In accordance with a preferred embodiment of the present invention the first and second plate portions are arranged and operated such that the capacitance measured therethrough varies as a generally linear function of the inclination of the housing.

The linearity of operation of the inclinometer is due, at least in part, to maintenance of the first and second plate portions at substantially the same potential, preferably virtual ground, i.e. zero volts. This prevents cross coupling between the first and second plate portions. In addition, the relatively low resistance of the conductive liquid makes stray capacitance effects negligible when the sensor is operated as a timing resistance and the voltages on the two plates are not equal. Preferably, the distance between the plates is very small compared with the diameter of the plates. For example in a preferred embodiment of the invention the diameter of the plates is 25 mm and the distance between the plates is 1-3 mm

An electronic circuit for maintaining the first and second plate portions at substantially the same potential is shown in Fig. 4. It is seen that capacitor plate 18 is coupled to an excitation source, such as the output of an AC oscillator, (not shown) while first and second plate portions 20 and 22 are each coupled to a respective operational amplifier 36 and 38 having an output Vo, which is supplied to a respective synchronized demodulator 40 and 42 and thence to respective low pass filters 44 and 46. The outputs of low pass filters 44 and 46 are designated as A and B. These outputs are processed such that the following relationship exists:

$$V_o = (A - B)/(A + B)$$

Due to the cylindrical shape of the housing and the relatively narrow gap between the first and second plate portions, the electric field between the first and second conductive plates is relatively constant and is substantially rotationally symmetric. As a result the displacement currents due to the liquid are substantially proportional to the angular overlap between the liquid and one of the first and second conductive plates.

Preferably the interior of housing 10 is maintained under a vacuum tight seal, without the use of organic materials, thus providing high reliability over a relatively long time span.

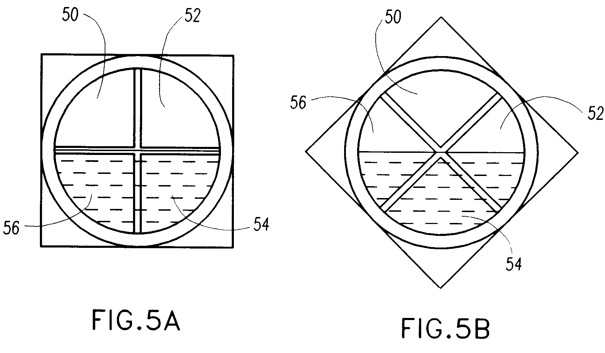

It is appreciated that the conductive surface 16 may have more than two parts and may be constructed to have four or more parts, 50, 52, 54 and 56 as illustrated in Figs. 5A and 5B. Such an arrangement can overcome the 180 degree ambiguity characteristic of the embodiment described hereinabove. In such a case, the circuitry of Fig. 4 is modified to have as many channels as there are parts to the conductive surface 16.

It will be appreciated by persons skilled in the art that the present invention is not limited by what has been particularly shown and described hereinabove. Rather the scope of the present invention is defined only by the claims which follow:

## Claims

1. An inclinometer comprising:
   a housing defining first and second wall surfaces;
   a first conductive plate defined along said first wall surface;
   a second conductive plate defined along said second wall surface, said conductive plate including first and second plate portions which are electrically insulated from each other;
   a dielectric liquid disposed within said housing and in capacitive relationship with said first and second conductive plates such that a change of inclination of the housing results in a corresponding change of relative rotational orientation between the liquid and the housing, such that the capacitance measured through the first and second plate portions varies as a function of the inclination of the housing.

2. Apparatus according to claim 1 and wherein the first and second plate portions are arranged such that the capacitance measured therethrough varies as a generally linear function of the inclination of the housing.

3. Apparatus according to either of claims 1 and 2 and wherein said housing is formed of an electrical insulator and the conductive plates are defined by conductive coatings formed on surfaces of the housing.

4. Apparatus according to any of the preceding claims and wherein said housing is formed of two pieces which are fixed together.

5. Apparatus according to any of the preceding claims and wherein said housing is hermetically sealed and is provided with at least one liquid ingress aperture, which is sealed subsequent to insertion of the liquid and also serves as a plated through electrical connector hole, permitting connection of an electrical conductor external to the housing to at least one of the conductive plates.

6. Apparatus according to any of the preceding claims and wherein said housing is formed of a ceramic material.

7. Apparatus according to any of the preceding claims and wherein said housing is formed by injection molding.

8. Apparatus according to any of the preceding claims and also comprising output circuitry coupled to said conductive plates for providing an output indication of inclination of the housing to display or utilization apparatus.

9. Apparatus according to claim 8 and wherein said output circuitry is formed onto said housing.

10. Apparatus according to claim 9 and wherein said output circuitry includes a printed circuit formed onto an outer surface of said housing.

11. Apparatus according to any of the preceding claims and wherein said first and second plate portions are maintained substantially at the same potential.

FIG.1

FIG.2

FIG.3A

FIG.3B

FIG.4

6

FIG.5A

FIG.5B